# EUROPEAN PATENT APPLICATION

(11) **EP 4 425 511 A1**
(43) Date of publication of application: **04.09.2024**
(21) Application number: 23159053.0
(22) Date of filing: 28.02.2023
(51) Int. Cl.: H01B 7/282, H01B 7/04, H01B 7/14

(54) **DYNAMIC SUBMARINE POWER CABLE**

(71) Applicant: NKT HV Cables AB, 371 60 Lyckeby (SE)
(72) Inventor: TORVALDSSON, Henrik, Karlskrona (SE); TYRBERG, Andreas, Lyckeby (SE); TJAHJANTO, Denny, Sundbyberg (SE)
(74) Representative: Kransell & Wennborg KB

(57) **Abstract**

A dynamic submarine power cable (1) comprising: a conductor (3), an insulation system (5) comprising an inner semiconducting layer (7) arranged around the conductor (3), an insulation layer (9) arranged around the inner semiconducting layer (7), and an outer semiconducting layer (11), a metallic water-blocking layer (15) arranged around the insulation system (5), and a bedding layer (13) arranged between the outer semiconducting layer (11) and the metallic water-blocking layer (15), wherein the static friction coefficient between an outer surface of the bedding layer (13) and the metallic water-blocking layer (15) is at least 0.4, and the static friction coefficient between an inner surface of the bedding layer (13) and the outer semiconducting layer (11) is at least 0.4.

## Description

### TECHNICAL FIELD

The present disclosure generally relates to dynamic submarine power cables.

### BACKGROUND

Dynamic submarine power cables are power cables designed to extend between a floating structure, such as an oil or gas platform, or a floating wind turbine, and the seabed.

Dynamic submarine power cables are specifically manufactured to withstand fatigue damages due to the constant movement as a result of wave motion better than regular submarine power cables.

In general, the life expectancy of a dynamic submarine power cable from a mechanical perspective depends on how well the cable is able to distribute the stress during movement.

### SUMMARY

It has been found by the present inventors that if the contact surfaces between the insulation system and the metallic sheath restrains movement between these components, the life expectancy of a dynamic submarine power cable will be positively influenced. This may in particular be an issue when the load is dynamic, resulting in different thermal conditions in the dynamic submarine power cable, and thus thermal expansions and contractions, which typically means floating wind application.

In view of the above, an object of the present disclosure is to provide a dynamic submarine power cable which solves or at least mitigates the problems of the prior art.

There is hence provided a dynamic submarine power cable comprising: a conductor, an insulation system comprising an inner semiconducting layer arranged around the conductor, an insulation layer arranged around the inner semiconducting layer, and an outer semiconducting layer, a metallic water-blocking layer arranged around the insulation system, and a bedding layer arranged between the outer semiconducting layer and the metallic water-blocking layer, wherein the static friction coefficient between an outer surface of the bedding layer and the metallic water-blocking layer is at least 0.4, and the static friction coefficient between an inner surface of the bedding layer and the outer semiconducting layer is at least 0.4.

By having a bedding layer that provides high friction between the metallic water-blocking layer and the outer semiconducting layer, movement between the metallic water-blocking layer and the outer semiconducting layer may be restricted and the life expectancy of the dynamic submarine power cable is therefore increased.

According to one example the static friction coefficient between the outer surface of the bedding layer and the metallic water-blocking layer is at least 0.5 such as at least 0.6, such as at least 1.

According to one example the static friction coefficient between the inner surface of the bedding layer and the outer semiconducting layer is at least 0.5 such as at least 0.6, such as at least 1.

According to one embodiment the bedding layer comprises one or more polymers.

According to one embodiment each polymer is an elastomer. In addition to good friction properties, elastomers are elastic and thus have a high yield strength, i.e., they have a good strain recovery. Therefore, when the dynamic submarine power cable is subjected to movement, i.e., bending, in an installed state, the bedding layer will even better recover to its initial shape. The bedding layer will therefore maintain contact with the outer semiconducting layer and the metallic water-blocking layer over many bending cycles of the dynamic submarine power cable, and the high friction interface between the outer semiconducting layer and the metallic water-blocking layer can be maintained even for varying load conditions. According to one embodiment the elastomer is ethylene propylene rubber, EPR, or ethylene propylene diene monomer, EPDM, rubber, or a polyurethane.

According to one embodiment the bedding layer comprises a plurality of layers, wherein the static friction coefficient between each layer is at least 0.4.

According to one embodiment the bedding layer is formed of one or more tape layers.

According to one example at least one tape layer is formed by a selfamalgamating tape.

According to one embodiment the bedding layer is semiconducting. Voltage equalisation between the outer semiconducting layer and the metallic water-blocking layer may thus be provided.

According to one embodiment the metallic water-blocking layer comprises stainless steel or copper. The metallic water-blocking layer may according to one example comprise a copper-alloy.

According to one embodiment the metallic water-blocking layer is longitudinally welded.

According to one embodiment the metallic water-blocking layer is corrugated.

According to one embodiment the metallic water-blocking layer is smooth.

According to one embodiment the outer semiconducting layer comprises a polymeric material.

According to one embodiment the bedding layer is in direct contact with the outer semiconducting layer and with the metallic water-blocking layer.

The bedding layer may fill up the space between the outer semiconducting layer and the metallic water-blocking layer.

The dynamic submarine power cable may be an AC power cable or a DC power cable.

The dynamic submarine power cable may comprise a single power core comprising the conductor, the insulation system, the bedding layer, and the metallic water-blocking barrier according to the first aspect, or it may comprise a plurality of stranded power cores, of which at least one but preferably a plurality of, such as all of, the power cores comprises the conductor, the insulation system, the bedding layer, and the metallic water-blocking barrier according to the first aspect.

The dynamic submarine power cable may be a high voltage dynamic submarine power cable.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-sectional view of an example of a dynamic submarine power cable;
Fig. 2 schematically shows a cross-sectional view of another example of a dynamic submarine power cable; and
Fig. 3 schematically depicts an offshore windfarm system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

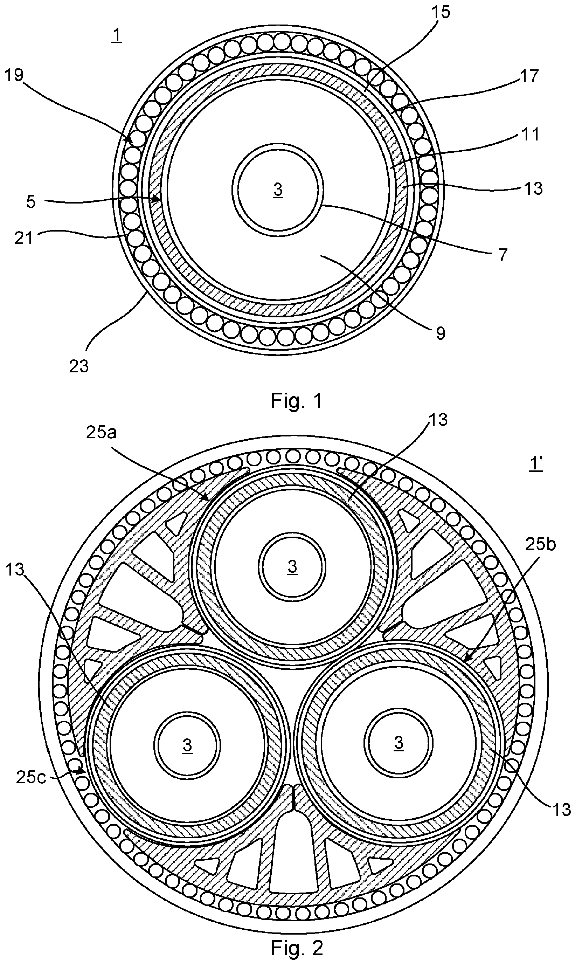

Fig. 1 shows an example of a dynamic submarine power cable 1. The dynamic submarine power cable 1 cable in the example in Fig. 1 is a single core cable. The exemplified dynamic submarine power cable 1 may be a DC power cable or a single-phase AC power cable.

The dynamic submarine power cable 1 comprises a conductor 3. The conductor 3 may for example comprise copper or aluminium.

The dynamic submarine power cable 1 comprises an insulation system 5 arranged around the conductor 3.

The insulation system 5 comprises an inner semiconducting layer 7 arranged around the conductor 3, an insulation layer 9 arranged around the inner semiconducting layer 7, and an outer semiconducting layer 11 arranged around the insulation layer 9.

The insulation system 5 may be an extruded insulation system. The insulation system 5 may comprise polymeric material. The inner semiconducting layer 7, the insulation layer 9, and the outer semiconducting layer 11 may thus have a polymer base, for example polyethylene, crosslinked polyethylene, polypropylene, EPR, or EPDM.

The inner semiconducting layer 7 and the outer semiconducting layer 11 comprises conductive particles mixed with the polymer base. The conductive particles may for example be carbon black.

The inner semiconducting layer 7 and the outer semiconducting layer 11 may or may not be crosslinked.

The dynamic submarine power cable 1 comprises a bedding layer 13 arranged around the outer semiconducting layer 11. The bedding layer 13 has an inner surface in direct contact with the outer semiconducting layer 11. The static friction coefficient between the inner surface of the bedding layer 13 and the outer semiconducting layer 11 is at least 0.4.

The dynamic submarine power cable 1 comprises a metallic water-blocking layer 15 arranged around the bedding layer 13. The metallic water-blocking layer 15 may for example comprise copper, such as pure copper or a copper alloy, such as a copper-nickel alloy, stainless steel, or aluminium.

The metallic water-blocking layer 15 may be longitudinally welded.

The metallic water-blocking layer 15 may be corrugated or smooth.

The metallic water-blocking layer 15 is arranged in direct contact with an outer surface of the bedding layer 13. The static friction coefficient between the outer surface of the bedding layer 13 and the metallic water-blocking layer 15 is at least 0.4.

The bedding layer 13 is simultaneously arranged in direct contact with both the outer semiconducting layer 11 and the metallic water-blocking layer 15.

The bedding layer 13 may comprise one or more polymers. Each of the one or more polymers may be an elastomer, such as EPR, EPDM or an elastomer polyurethane.

The bedding layer 13 may be semiconducting. For example, the one or more polymers may be semiconducting. For example, the one or more polymers may comprise conductive particles dispersed therein.

The bedding layer 13 may comprise one or more tape layers or it may be extruded. In case the bedding layer 13 is extruded it may be formed by one or more extruded layers.

In examples in which the bedding layer 13 comprises one or more layers, such as one or more tape layers, the static friction coefficient between each layer may be at least 0.4. Each layer may be made of the same material, or at least one layer may be made of a different material than the other layer(s).

At least one of the one or more tape layers may be formed by selfamalgamating tape.

The dynamic submarine power cable 1 may further comprise a polymeric layer or sheath 17 arranged around the metallic water-blocking layer 15.

Further, the dynamic submarine power cable 1 may comprise one or more armour layers 19, each comprising a plurality of helically laid armour wires 21.

The dynamic submarine power cable 1 may comprise an outer sheath or serving 23. The outer sheath or serving 23 may comprise a polymeric material.

Fig. 2 shows another example of a dynamic submarine power cable. The dynamic submarine power cable 1' in Fig. 2 is a multi-core dynamic submarine power cable comprising a plurality of power cores 25a-25c. Each power core 25a-25b is very similar in structure to the dynamic submarine power cable 1 described above. Thus, each power core 25a-25c comprises a respective insulation system 5, bedding layer 13, and metallic water-blocking layer 15.

In an installed state, the dynamic submarine power cable 1, 1' is connected to a floating platform through e.g., a bend stiffener or a Bellmouth and extends down to the seabed from the floating platform.

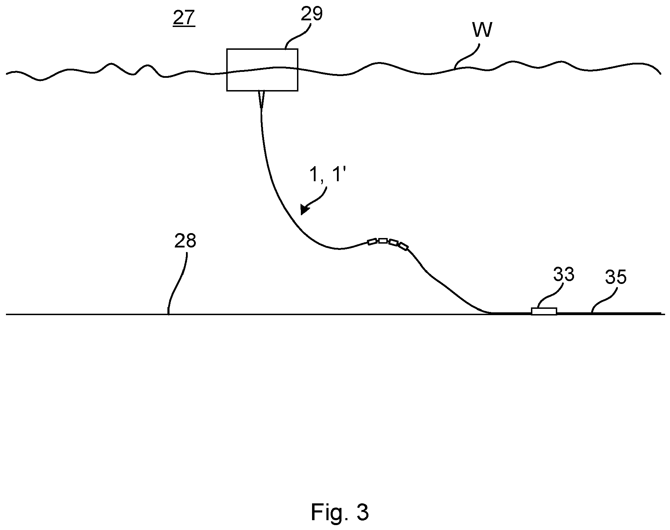

Fig. 3 schematically shows an example of an offshore windfarm system 27. The offshore windfarm system 27 comprises one or more floating structures 29 and the dynamic submarine power cable 1, 1'.

The floating structure 29 floats in a body of water W, such as the sea. The floating structure 29 may be a floating wind turbine structure, a floating substation structure, a floating transformer structure, for transforming AC power between different voltage levels, and/or a floating power converter structure for providing conversion between AC and DC voltages.

The offshore windfarm system 27 may comprise a joint 33 and a static submarine power cable 35 connected to the joint 33.

The dynamic submarine power cable 1, 1' is connected to the floating structure 29. The dynamic submarine power cable 1, 1' extends from the floating structure 29 to the seabed 28. The dynamic submariner power cable 1, 1' may be connected to the joint 33, as shown in the example in Fig. 3 such that the dynamic submarine power cable 1, 1' is connected to the static submarine power cable 35, or it could for example be connected between two floating structures 29, such as between two floating wind turbine structures, or between a floating wind turbine structure and one of a floating substation structure, a floating transformer structure, or a floating power converter structure.

The dynamic submarine power cable 1, 1' is in operation subjected to varying loads, and the amount of power produced by the floating wind turbine structure(s), transported by the dynamic submarine power cable 1, 1' also varies depending on weather conditions. Thus, the dynamic submarine power cable 1, 1' will experience different thermal conditions depending on the power it transports and with that thermal expansion and thermal contraction cycles. This may cause relative radial movement between internal components of the dynamic submarine power cable 1, 1'. Beneficially, the bedding layer 13 provides high friction between the metallic water-blocking layer 15 and the outer semiconducting layer 11 during different operating conditions of the dynamic submarine power cable 1, 1', thus restricting movement between the metallic water-blocking layer 15 and the outer semiconducting layer 11.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A dynamic submarine power cable (1; 1') comprising:
a conductor (3),
an insulation system (5) comprising an inner semiconducting layer (7) arranged around the conductor (3), an insulation layer (9) arranged around the inner semiconducting layer (7), and an outer semiconducting layer (11),
a metallic water-blocking layer (15) arranged around the insulation system (5), and
a bedding layer (13) arranged between the outer semiconducting layer (11) and the metallic water-blocking layer (15),
wherein the static friction coefficient between an outer surface of the bedding layer (13) and the metallic water-blocking layer (15) is at least 0.4, and the static friction coefficient between an inner surface of the bedding layer (13) and the outer semiconducting layer (11) is at least 0.4.

2. The dynamic submarine power cable (1; 1') as claimed in claim 1, wherein the bedding layer (13) comprises one or more polymers.

3. The dynamic submarine power cable (1; 1') as claimed in any of the preceding claims, wherein each polymer is an elastomer.

4. The dynamic submarine power cable (1; 1') as claimed in claim 3, wherein the elastomer is ethylene propylene rubber, EPR, or ethylene propylene diene monomer, EPDM, rubber, or a polyurethane.

5. The dynamic submarine power cable (1; 1') as claimed in any of the preceding claims, wherein the bedding layer (13) comprises a plurality of layers, wherein the static friction coefficient between each layer is at least 0.4.

6. The dynamic submarine power cable (1; 1') as claimed in any of the preceding claims, wherein the bedding layer (13) is formed of one or more tape layers.

7. The dynamic submarine power cable (1; 1') as claimed in any of the preceding claims, wherein the bedding layer (13) is semiconducting.

8. The dynamic submarine power cable (1; 1') as claimed in any of the preceding claims, wherein the metallic water-blocking layer (15) comprises stainless steel or copper.

9. The dynamic submarine power cable (1; 1') as claimed in any of the preceding claims, wherein the metallic water-blocking layer (15) is longitudinally welded.

10. The dynamic submarine power cable (1; 1') as claimed in any of the preceding claims, wherein the metallic water-blocking layer (15) is corrugated.

11. The dynamic submarine power cable (1; 1') as claimed in any of claims 1-9, wherein the metallic water-blocking layer (15) is smooth.

12. The dynamic submarine power cable (1; 1') as claimed in any of the preceding claims, wherein the outer semiconducting layer (11) comprises a polymeric material.

13. The dynamic submarine power cable (1; 1') as claimed in any of the preceding claims, wherein the bedding layer (13) is in direct contact with the outer semiconducting layer (11) and with the metallic water-blocking layer (15).

14. An offshore windfarm system comprising:
a floating structure, and
a dynamic submarine power cable as claimed in any of the preceding claims connected to the floating structure.

15. The offshore windfarm system as claimed in claim 14, wherein the floating structure is a floating wind turbine structure, a floating substation structure, a floating transformer structure, or a floating power converter structure.
